# EUROPÄISCHE PATENTANMELDUNG

(11) **EP 2 019 027 A1**
(43) Veröffentlichungstag der Anmeldung: **28.01.2009**
(21) Anmeldenummer: 07113298.9
(22) Anmeldetag: 27.07.2007
(51) Int. Cl.: B62D 29/00

(54) **Verstärkungselement zur Verstärkung von Hohlräumen von strukturellen Bauteilen**

(71) Anmelder: Sika Technology AG, 6340 Baar (CH)
(72) Erfinder: Finter, Jürgen, CH-8037 Zürich (CH); Blank, Norman, CH-8803 Rüschlikon (CH); Burchardt, Bernd, CH-8104 Weinigen (CH)
(74) Vertreter: Sika Patent Attorneys

(57) **Zusammenfassung**

Die vorliegende Erfindung betrifft ein Verstärkungselement (1) zur Verstärkung in Hohlräumen von strukturellen Bauteilen (6), welches aus einem schäumbaren Material (2) besteht und an seiner Aussenseite einen Faserwerkstoff aufweist, der mit einer härtenden Klebstoffzusammensetzung versehen ist. Das schäumbare Material kann dabei an einem Trägerteil (4) angebracht sein. Erfindungsgemässe Verstärkungselemente werden beispielsweise in strukturellen Bauteilen wie Karosserien und/oder Rahmen von Transport- und Fortbewegungsmitteln eingesetzt.

## Beschreibung

### Technisches Gebiet

Die Erfindung geht aus von einem Verstärkungselement aus einem schäumbaren Material zur Verstärkung in Hohlräumen von strukturellen Bauteilen, wie sie beispielsweise bei Automobilkarossen und dergleichen eingesetzt werden, nach dem Oberbegriff des ersten Anspruchs. Weiterhin geht die Erfindung aus von der Verwendung derartiger Verstärkungselemente und von einem Verfahren zur Verstärkung nach dem Oberbegriff weiterer unabhängiger Ansprüche.

### Stand der Technik

Oftmals werden bei Konstruktionen jeglicher Art hohlräumige strukturelle Bauteile eingesetzt. Diese Bauweise erlaubt es, das Gewicht der Konstruktion und den Materialaufwand niedrig zu halten, jedoch geht bei dieser Bauweise häufig auch Stabilität und Festigkeit verloren. Die Hohlräume bieten zudem, aufgrund der grösseren Oberfläche des hohlen Bauteils, eine grössere Angriffsfläche für Korrosion, falls Feuchtigkeit oder Schmutz in sie eindringt. Ebenfalls können Geräusche, die beispielsweise durch Wind oder Vibrationen verursacht werden, in oder entlang der Hohlräume übertragen werden. Aufgrund der Form und/oder des engen Ausmasses solcher Hohlräume ist es vielfach schwierig diese effizient zu verstärken, abzudichten oder die Geräuschübertragung einzudämmen.

Insbesondere um die mechanischen Eigenschaften hohlräumiger struktureller Bauteile zu verbessern, ist es weitgehend üblich, lokale Verstärkungselemente in die Bauteile einzusetzen oder einzubauen. Derartige Verstärkungselemente bestehen typischerweise aus Metallen oder Kunststoffen oder aus Kombinationen dieser Werkstoffe. An schwer zugänglichen Stellen, welche beispielsweise erst nach der Montage des Bauteils verstärkt oder abgedichtet werden sollen, werden häufig auch Strukturschäume eingesetzt. Dies ist etwa bei der Herstellung von Fahrzeugstrukturen, im Folgenden auch Karosserien genannt, der Fall.
Die mechanischen Eigenschaften solcher Strukturschäume sind jedoch aufgrund der Scherfestigkeit, der Haftung und dem ungenügenden Verhalten bei hohen Temperaturen nicht in jedem Fall ausreichend.

### Darstellung der Erfindung

Der Erfindung liegt die Aufgabe zugrunde, bei Verstärkungselementen zur Verstärkung in Hohlräumen von strukturellen Bauteilen die mechanischen Eigenschaften gegenüber dem Stand der Technik zu verbessern.

Erfindungsgemäss wird dies durch die Merkmale des ersten Anspruchs erreicht.

Kern der Erfindung sind also Verstärkungselemente zur Verstärkung in Hohlräumen von strukturellen Bauteilen, wobei diese Verstärkungselemente aus einem schäumbaren Material bestehen und an ihrer Aussenseite zumindest teilweise einen Faserwerkstoff aufweisen, welcher mit einer härtenden Klebstoffzusammensetzung versehen ist.

Die Vorteile der Erfindung sind unter anderem darin zu sehen, dass die Verstärkungselemente neben den verstärkenden, dichtenden und/oder geräuschdämmenden Eigenschaften eines Strukturschaums, zusätzlich die verstärkenden Eigenschaften des Faserwerkstoffs mit der härtenden Klebstoffzusammensetzung aufweisen. Zudem können die gewünschten mechanischen Eigenschaften durch geeignete Wahl des Faserwerkstoffs sowie der härtenden Klebstoffzusammensetzung gezielt ausgewählt werden.
Dadurch, dass der Faserwerkstoff durch das schäumbare Material an die Innenwand des Hohlraums gepresst wird während die härtende Klebstoffzusammensetzung noch nicht ausgehärtet ist, passt er sich Hohlräumen beliebiger Struktur an und ermöglicht die Verstärkung auch an schwer zugänglichen Stellen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Kurze Beschreibung der Zeichnungen

Im Folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:
- Figur 1: eine schematische Darstellung eines Verstärkungselements;
- Figur 2: eine schematische Darstellung eines Verstärkungselements im Querschnitt;
- Figur 3: eine schematische Darstellung eines Verstärkungselements mit Trägerteil;
- Figur 4: eine schematische Darstellung eines Verstärkungselements mit Trägerteil im Querschnitt;
- Figur 5: eine schematische Darstellung eines Verstärkungselements mit hohlem Trägerteil und Befestigungsmittel;
- Figur 6: eine schematische Darstellung eines Verstärkungselements mit hohlem Trägerteil und Befestigungsmittel im Querschnitt;
- Figur 7: eine schematische Darstellung eines Verstärkungselements in einem strukturellen Bauteil vor der Schäumung des schäumbaren Materials;
- Figur 8: eine schematische Darstellung eines Verstärkungselements in einem strukturellen Bauteil nach der Schäumung des schäumbaren Materials.

Es sind nur die für das unmittelbare Verständnis der Erfindung wesentlichen Elemente gezeigt.

### Weg zur Ausführung der Erfindung

Mit "Poly" beginnende Substanznamen wie beispielsweise Polyisocyanat, Polyurethan, Polyester oder Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

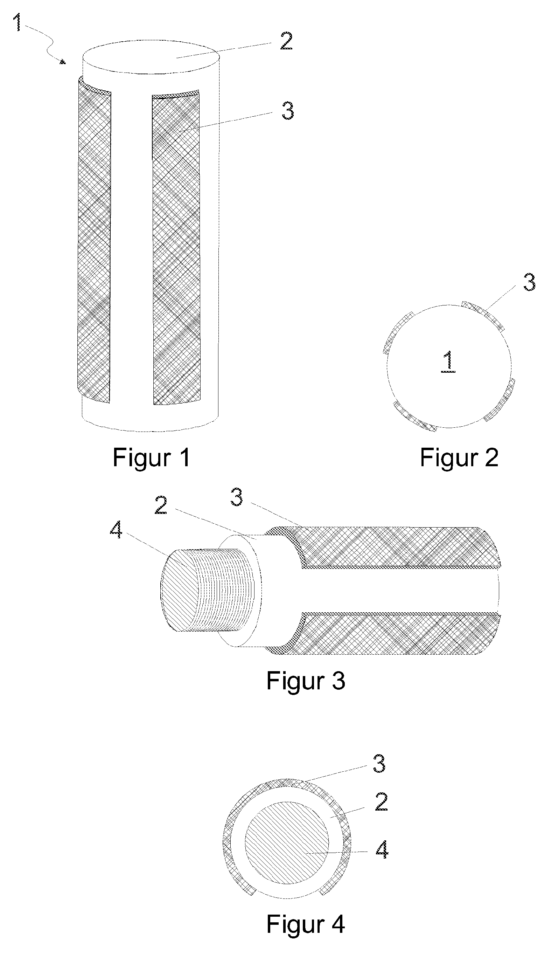

In den Figuren 1 und 2 ist ein erfindungsgemässes Verstärkungselement 1 aus einem schäumbaren Material 2 gezeigt, das an der Aussenseite Streifen bzw. Bahnen eines Faserwerkstoffs 3, welcher mit einer härtenden Klebstoffzusammensetzung versehen ist, aufweist.

Als schäumbares Material 2 kann dabei grundsätzlich jedes beliebige Material eingesetzt werden, das kontrolliert zur Schäumung gebracht werden kann. Dieses Material kann dabei Verstärkungseigenschaften aufweisen oder auch nicht. Typischerweise wird das schäumbare Material thermisch, durch Feuchtigkeit oder durch elektromagnetische Strahlung geschäumt.
Ein solches schäumbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage Schaumstrukturen in Polymeren zu erzeugen.

Bevorzugt wird das schäumbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.
Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.
Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 160 °C, insbesondere von 80 °C bis 150 °C, bevorzugt von 90 °C bis 140 °C, schäumbar.

Als schäumbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Neben Epoxid-Festharzen eignen sich auch kristalline Polyepoxide wie Triglycidylisocyanurate, Terephthalsäurediglycidylether, Gemische aus Terephthalsäurediglycidylether mit Trimellitsäuretriglycidylether , Hydrochinondiglycidylether sowie Addukte aus Trimethylolpropandiglycidylether mit Diisocyanaten wie 4,4'-, 2,4'- und 2,2'-Diphenylmethandiisocyanat (MDI), 2,4- und 2,6-Toluylendiisocyanat (TDI) oder 1-Isocyanato-3,3,5-trimethyl-5-isocyanatomethyl-cyclohexan (IPDI).
Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete schäumbare Materialien sind Treibmittel enthaltende einkomponentige Polyurethanzusammensetzungen aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschreiben sind in EP 0 204 970.

Weiterhin eignen sich als schäumbare Materialien Treibmittel enthaltende zweikomponentige Epoxid/Polyurethan-Zusammensetzungen, wie sie beispielsweise beschrieben sind in WO 2005/080524 A1, dessen Offenbarung hiermit eingeschlossen ist.

Ebenfalls geeignete schäumbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben, deren Offenbarung hiermit eingeschlossen ist. Als schäumbare Materialien mit Verstärkungseigenschaften sind beispielsweise diejenigen bevorzugt, welche unter dem Handelsnamen SikaReinforcer^{®} 941 von der Sika Corp., USA, vertrieben werden. Diese sind beschrieben in US 6,387,470, dessen Offenbarung hiermit eingeschlossen ist.

Als Faserwerkstoffe eignen sich solche aus hochfesten Fasern wie beispielsweise Glasfasern, Kohlefasern, Metallfasern, insbesondere Stahlfasern, Polymerfasern, insbesondere Aramidfasern, und Keramikfasern, insbesondere Glasfasern und Kohlefasern.
Um die Ausdehnung des schäumbaren Materials zu erlauben, ist der Faserwerkstoff typischerweise nicht rundherum geschlossen auf dem schäumbaren Material angebracht. Insbesondere ist er in Form von Streifen oder Bahnen auf dem schäumbaren Material angebracht.
Im Faserwerkstoff können die Fasern dabei unidirektional oder als Gewebe oder Gewirke oder als Multiaxialgelege vorliegen. Bei der unidirektionalen Anordnung sind alle Fasern oder Faserbündel des Faserwerkstoffs in die gleiche Richtung, also parallel ausgerichtet. Beim Gewebe sind die Fasern oder Faserbündel meist als rechtwinkliges Flächengebilde angeordnet. Beim Gewirke sind gleichlaufende Fasern zu Maschen miteinander verschlungen und bei einem Multiaxialgelege liegen die Fasern oder Faserbündel parallel zueinander und in Schichten unterschiedlicher Faserorientierung übereinander angeordnet.

Als härtende Klebstoffzusammensetzungen können verschiedene Systeme zur Anwendung kommen, welche kontrolliert zur Aushärtung gebracht werden können. Dies geschieht vorzugsweise thermisch, durch Feuchtigkeit, elektromagnetische Strahlung oder Partikelstrahlung, insbesondere thermisch.

Als härtende Klebstoffzusammensetzungen eignen sich insbesondere hitzehärtende Klebstoffzusammensetzungen, welche bei einer Temperatur von von ≥ 140 °C, insbesondere von 150 °C bis 220 °C, bevorzugt von 160 °C bis 200 °C, aushärten.

Bevorzugt ist die härtende Klebstoffzusammensetzung eine einkomponentige Epoxidharzzusammensetzung, eine einkomponentige Polyurethanzusammensetzung oder eine einkomponentige Acrylatzusammensetzung.

Meist bevorzugt ist die härtende Klebstoffzusammensetzung eine einkomponentige, hitzehärtende Epoxidharzzusammensetzung umfassend mindestens ein Epoxidharz A und mindestens einen Härter B für Epoxidharze, welcher durch erhöhte Temperatur aktiviert wird.
Das Epoxidharz A, welches durchschnittlich mehr als eine Epoxidgruppe pro Molekül aufweist, ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharz" verwendet. Die Glastemperatur von Festharzen liegt über Raumtemperatur, d.h. sie lassen sich bei Raumtemperatur zu schüttfähigen Pulvern zerkleinern. Bevorzugte Epoxid-Festharze weisen die Formel (I) auf

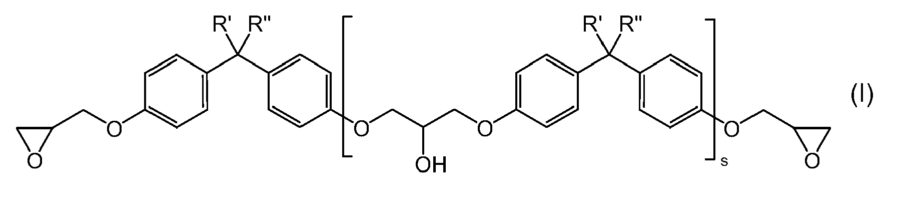

Hierbei stehen die Substituenten R' und R" unabhängig voneinander entweder für H oder CH₃. Weiterhin steht der Index s für einen Wert von ≥ 1.5, insbesondere von 2 bis 12.
Derartige Epoxid-Festharze sind beispielsweise kommerziell erhältlich von The Dow Chemical Company, USA, von Huntsman International LLC, USA, oder von Hexion Specialty Chemicals Inc, USA.

Verbindungen der Formel (I) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxid-Festharze im engeren Sinn, d.h. wo der Index s einen Wert von ≥ 1.5 aufweist.

Bevorzugte Epoxid-Flüssigharze weisen die Formel (II) auf 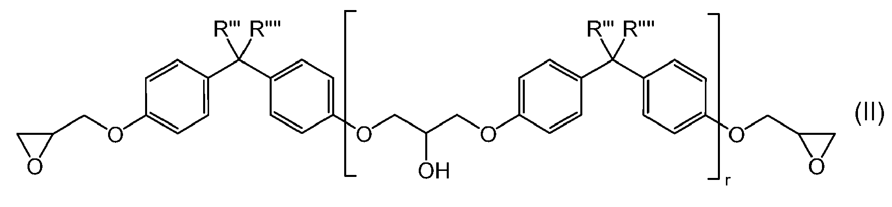 Hierbei stehen die Substituenten R''' und R"" unabhängig voneinander entweder für H oder CH₃. Weiterhin steht der Index r für einen Wert von 0 bis 1. Bevorzugt steht r für einen Wert von ≤ 0.2.
Es handelt sich somit vorzugsweise um Diglycidylether von Bisphenol-A (DGEBA), von Bisphenol-F sowie von Bisphenol-A/F. Die Bezeichnung "A/F" verweist hierbei auf eine Mischung von Aceton mit Formaldehyd, welche als Edukt bei dessen Herstellung verwendet wird. Solche Flüssigharze sind beispielsweise unter den Handelsnamen Araldite^{®} GY 250, Araldite^{®} PY 304, Araldite^{®} GY 282 von der Firma Huntsman International LLC, USA, oder D.E.R.^{®} 331 oder D.E.R.^{®} 330 von der Firma The Dow Chemical Company, USA, oder unter dem Handelsnamen Epikote^{®} 828 oder Epikote^{®} 862 von der Firma Hexion Specialty Chemicals Inc, USA, kommerziell erhältlich.

Bevorzugt stellt das Epoxidharz **A** ein Epoxid-Flüssigharz der Formel (II) dar. In einer meist bevorzugten Ausführungsform enthält die hitzehärtende Epoxidharzzusammensetzung sowohl mindestens ein Epoxid-Flüssigharz der Formel (II) als auch mindestens ein Epoxid-Festharz der Formel (I).

Der Anteil von Epoxidharzes **A** beträgt vorzugsweise 2 bis 80 Gew.-%, insbesondere 5 bis 70 Gew.-%, bevorzugt 7 bis 60 Gew.-%, bezogen auf das Gesamtgewicht der härtenden Klebstoffzusammensetzung.

Der Härter **B** für Epoxidharze wird durch erhöhte Temperatur aktiviert. Es handelt sich hierbei vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-Chlor-4-Methyl-phenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole und Amin-Komplexe eingesetzt werden.
Bevorzugt handelt es sich beim Härter **B** um einen Härter, welcher ausgewählt ist aus der Gruppe bestehend aus Dicyandiamid, Guanamine, Guanidine, Aminoguanidine und deren Derivate; substituierte Harnstoffe, insbesondere 3-Chlor-4-Methylphenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff(Diuron), sowie Imidazole und Amin-Komplexe.
Besonders bevorzugt als Härter **B** ist Dicyandiamid.

Der Anteil des Härters **B** beträgt vorzugsweise 0.05 bis 8 Gew.-%, insbesondere 0.1 bis 6 Gew.-%, bevorzugt 0.2 bis 5 Gew.-%, bezogen auf das Gesamtgewicht der härtenden Klebstoffzusammensetzung.
Der Begriff "Härter" schliesst im vorliegenden Dokument auch Katalysatoren und katalytisch wirkende Verbindungen mit ein. Dem Fachmann ist in diesem Fall klar, dass beim Einsatz eines Katalysators oder einer katalytisch wirkenden Verbindung als Härter B, der Anteil der Härters B am gesamten Schaum im unteren Bereich des angegebenen Wertebereichs liegt.

Ebenfalls geeignet ist die härtende Klebstoffzusammensetzung eine einkomponentige, hitzehärtende Polyurethanzusammensetzung, welche aufgebaut ist aus polymeren Polyolen und Polyisocyanaten.

Geeignete Polyisocyanate sind insbesondere Di- und Triisocyanate. Geeignete Diisocyanate sind aliphatische, cycloaliphatische, aromatische oder arylaliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI. Geeignete Triisocyanate sind Trimere oder Biurete von aliphatischen, cycloaliphatischen, aromatischen oder arylaliphatischen Diisocyanaten, insbesondere die Isocyanurate und Biurete der im vorherigen Absatz beschriebenen Diisocyanate. Selbstverständlich können auch geeignete Mischungen von Di- oder Triisocyanate eingesetzt werden.

Als Polyole eignen sich beispielsweise die folgenden handelsüblichen Polyole oder beliebige Mischungen davon:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Die Polyoxyalkylendiole können unterschiedliche Ungesättigtheitsgrade (gemessen nach ASTM D-2849-69 und angegeben in Milliäquivalent Ungesättigtheit pro Gramm Polyol (mEq/g)) aufweisen. Jene mit einem niedrigen Ungesättigtheitsgrad werden beispielsweise mit Hilfe von so genannten Double Metal Cyanide Komplex-Katalysatoren (DMC-Katalysatoren) hergestellt, jene mit einem höheren Ungesättigtheitsgrad werden beispielsweise mit Hilfe von anionischen Katalysatoren wie NaOH, KOH, CsOH oder Alkalialkoholaten hergestellt. Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 8'000 g/mol. Unter "Molekulargewicht" versteht man im vorliegenden Dokument stets das Molekulargewichtsmittel Mn.
   Ebenfalls besonders geeignet sind so genannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Azelainsäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polykohlenwasserstoffpolyole, auch Oligohydrocarbonole genannt, wie beispielsweise polyhydroxyfunktionelle Ethylen-Propylen-, Ethylen-Butylen- oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden und auch hydriert sein können.
- Polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (kommerziell erhältlich unter dem Namen Hycar^{®} CTBN von Emerald Performance Materials, LLC, USA) hergestellt werden können.

Diese genannten Polyole weisen bevorzugt ein mittleres Molekulargewicht von 250 bis 30'000 g/mol, insbesondere von 1'000 bis 30'000 g/mol, und weisen bevorzugt eine mittlere OH-Funktionalität im Bereich von 1.6 bis 3 auf.

Vorteilhaft sind die Polymere di- oder höherfunktioneller Polyole mit OH-Äquivalentsgewichten von 300 bis 6000 g/OH-Äquivalent, insbesondere von 600 bis 4000 g/OH-Äquivalent, vorzugsweise 700 bis 2200 g/OH-Äquivalent. Weiterhin vorteilhaft sind die Polyole ausgewählt aus der Gruppe bestehend aus Polyethylenglycolen, Polypropylenglycolen, Polyethylenglycol-Polypropylenglycol-Block-Co-polymeren, Polybutylenglycolen, hydroxylterminierten Polybutadienen, hydroxylterminierten Butadien/Acrylnitril-Copolymeren, hydroxylterminierten synthetischen Kautschuken, deren Hydrierungsprodukten und Gemischen dieser genannten Polyole.

Zusätzlich zu diesen genannten Polyolen können niedrigmolekulare zwei- oder mehrwertige Alkohole wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole und andere höherwertige Alkohole, niedrigmolekulare Alkoxylierungsprodukte der vorgenannten zwei- und mehrwertigen Alkohole sowie Mischungen der vorgenannten Alkohole bei der Herstellung des Polyurethanpolymers mitverwendet werden.

Die Polyurethanzusammensetzung enthält weiterhin mindestens einen Härter **B',** welcher gegenüber Isocyanaten reaktive Gruppen enthält und in blockierter Form vorliegt. Die Blockierung kann dabei chemischer oder physikalischer Natur sein. Beispiele für geeignete chemisch blockierte Härter sind über eine Komplexbindung an Metalle gebundene Polyamine, im Besonderen Komplexverbindungen von Methylendianilin (MDA) und Natriumchlorid. Solche Komplexverbindungen werden üblicherweise mit der Bruttoformel (MDA)₃·NaCl beschrieben. Ein geeigneter Typ ist als Dispersion in Diethylhexylphthalat unter dem Handelsnamen Caytur^{®} 21 von Chemtura Corp., USA, erhältlich. Der Komplex zersetzt sich beim Erwärmen auf 80 bis 160 °C mit bei höherer Temperatur zunehmender Geschwindigkeit, wodurch Methylendianilin als aktiver Härter freigesetzt wird. Beispiele für physikalisch blockierte Härter sind mikroverkapselte Härter. Zur Verwendung als Härter in mikroverkapselter Form insbesondere geeignet sind zwei- oder mehrwertige Alkohole wie 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole, niedrigmolekulare Alkoxylierungsprodukte der vorgenannten zwei- und mehrwertigen Alkohole; kurzkettige Polyesterpolyole wie Terephthalsäurebisglykolester; aliphatische, cycloaliphatische und aromatische Aminoalkohole wie Ethanolamin, Propanolamin, Butanolamin, N-Methylethanolamin, Diethanolamin, Triethanolamin; Hydrazide von Dicarbonsäuren; aliphatische Polyamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexamethylendiamin, 2,2,4- und 2,4,4-Trimethylhexamethylendiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 1,3-Diaminopentan (DAMP), 2,5-Dimethyl-1,6-hexamethylendiamin, Dimerfettsäurediamine; cycloaliphatische Polyamine wie 1,2-, 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, Bis-(4-amino-3,5-dimethylcyclohexyl)methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 1-Cyclohexyl-amino-3-aminopropan, 2,5(2,6)-Bis-(aminomethyl)-bicyclo[2.2.1]heptan (NBDA, hergestellt von Mitsui Chemicals, Japan), 3(4),8(9)-Bis-(aminomethyl)-tricyclo-[5.2.1.02,6]decan, 1,4-Diamino-2,2,6-trimethylcyclohexan (TMCDA), 3,9-Bis-(3-aminopropyl)-2,4,8,10-tetraoxaspiro[5.5]undecan, 1,3- und 1,4-Xylylendiamin; Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit theoretisch zwei oder drei Aminogruppen, erhältlich beispielsweise unter dem Namen Jeffamine® (hergestellt von Huntsman International LLC, USA); aromatische Polyamine wie Methylendianilin, Diaminodiphenylether, Diaminodiphenylsulfon, die isomeren Phenylendiamine, Aminodiphenylamin. Bevorzugt sind die genannten aliphatischen, cycloaliphatischen und aromatischen Polyamine. Die Mikroverkapselung dieser Härter kann nach einem der gängigen Verfahren durchgeführt werden, beispielsweise mittels Sprühtrocknung, Grenzflächenpolymerisation, Koazervation, Tauch- oder Zentrifugenverfahren, Wirbelbettverfahren, Vakuum-Verkapselung, elektrostatische Mikroverkapselung. Die so erhaltenen Mikrokapseln haben eine Partikelgrösse von 0.1 bis 100 µm, bevorzugt 0.3 bis 50 µm. Die Grösse der Mikrokapseln ist so bemessen, dass sie sich beim Erhitzen einerseits effektiv öffnen, und andererseits nach der Aushärtung eine optimale Homogenität und damit Kohäsionsfestigkeit des Schaums erhalten wird. Sie dürfen weiterhin keinen schädlichen Einfluss auf die Adhäsionseigenschaften des Schaums ausüben. Als Material für die Kapselhülle kommen Polymere in Betracht, die im zu verkapselnden Härter unlöslich sind und einen Schmelzpunkt von 40 bis 200 °C aufweisen. Beispiele für geeignete Polymere sind KohlenwasserstoffWachse, Polyethylenwachse, Wachsester, Polyester, Polyamide, Polyacrylate, Polymethacrylate oder Mischungen mehrerer solcher Polymeren.

Von den hitzehärtenden Polyurethanzusammensetzungen sind aufgrund der besseren Lagerstabilität insbesondere solche geeignet, welche aufgebaut sind aus polymeren Polyolen wie sie vorhergehend beschrieben wurden und verkapselten oder oberflächendeaktivierten Isocyanaten. Verkapselte oder oberflächendeaktivierte Polyisocyanate sind dem Fachmann bekannt und beispielsweise beschreiben in EP 0 204 970 oder in EP 0 922 720 A1, deren Offenbarung hiermit eingeschlossen ist. Als Isocyanate eignen sich dabei die vorhergehend beschriebenen.

Weiterhin kann die härtende Klebstoffzusammensetzung eine einkomponentige, hitzehärtende Acrylatzusammensetzung sein. Diese umfasst vorzugsweise mindestens ein zwei- oder mehrwertiges Acryl- oder Methacrylgruppen enthaltendes Monomer sowie mindestens ein monofunktionelles Acryl- oder Methacrylgruppen enthaltendes Monomer. Beispiele für geeignete zwei- oder mehrwertige Acryl- oder Methacrylgruppen enthaltende Monomere sind Acrylate und Methacrylate von aliphatischen Polyetherpolyurethanen und Polyesterpolyurethanen, Polyethern, Polyestern, Novolaken, zwei- und mehrwertigen aliphatischen, cycloaliphatischen und aromatischen Alkoholen, Glykolen und Phenolen. Beispiele für monofunktionelle Acryl- oder Methacrylgruppen enthaltende Monomere sind Methylacrylat und -methacrylat, Ethylacrylat und -methacrylat, Hexylacrylat und -methacrylat, Dodecylacrylat und -methacrylat, Tetrahydrofurfurylacrylat und -methacrylat, sowie hydroxylgruppenhaltige Acrylate und Methacrylate wie 2-Hydroxyethylacrylat und -methacrylat und 2-Hydroxypropylacrylat und -methacrylat.
Als Härter **B"** enthält die Acrylatzusammensetzung einen thermischen Initiator in blockierter Form, welcher die Polymerisation der Acrylat- oder Methacrylatmonomere auslöst. Beispiele für geeignete thermische Initiatoren sind Azobisisobutyronitrlil (AIBN); Diacylperoxide wie Benzoylperoxid, Lauroylperoxid, und Decanoylperoxid; Peroxydicarbonate wie Dipropylperoxydicarbonat; Peroxyoxalate wie Di-*tert*-butylperoxyoxalat; Hyponitrite wie Di-*tert*-butylhyponitrit. Bevorzugt sind AIBN und Benzoylperoxid. Der blockierte thermische Initiator, insbesondere AIBN und Benzoylperoxid, liegt bevorzugt in mikroverkapselter Form vor. Die Herstellung von mikroverkapselten organischen Peroxiden wird beispielsweise beschrieben in EP 0 730 493 B1.

Die härtende Klebstoffzusammensetzung härtet vorzugsweise bei einer Temperatur von ≥ 140 °C, insbesondere von 150 °C bis 220 °C, bevorzugt von 160 °C bis 200 °C, aus. Das heisst, dass bei dieser Temperatur der Härter **B,** der Härter **B'** bzw. der Härter **B"** aktiviert wird oder für den Fall, dass verkapselte Isocyanate oder Härter eingesetzt werden, dass bei dieser Temperatur die verkapselte Komponente freigesetzt wird.

Ein wesentlicher Punkt der hier vorliegenden Erfindung ist, dass die Schäumung des schäumbaren Materials unabhängig von der Aushärtung der Klebstoffzusammensetzung, insbesondere vorher, ausgeführt werden kann. Der Grund dafür ist, dass die Aushärtung der Klebstoffzusammensetzung erst erfolgen darf, wenn die Schäumung des schäumbaren Materials grösstenteils stattgefunden hat. Andernfalls härtet die Klebstoffzusammensetzung aus bevor sie durch die Schäumung den vorgesehenen Platz erreicht hat.
Für die bevorzugte Ausführungsform der Erfindung, bei welcher das schäumbare Material thermisch geschäumt wird und die härtende Klebstoffzusammensetzung hitzehärtend ist, bedeutet das, dass die Aushärtungstemperatur der Klebstoffzusammensetzung oberhalb der Schäumungstemperatur des schäumbaren Materials liegen muss.

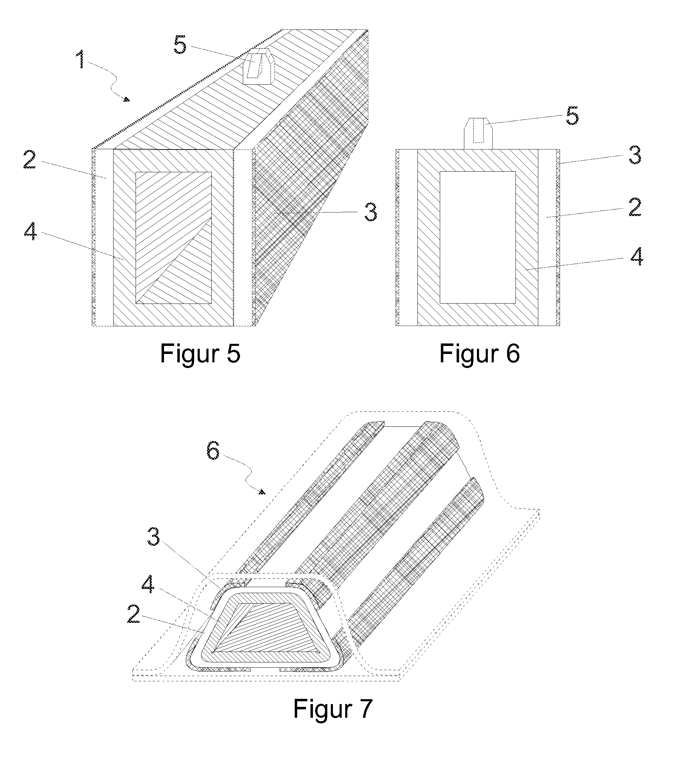

Wie in den Figuren 3 bis 6 gezeigt ist, kann das schäumbare Material an einem Trägerteil 4 aufgetragen bzw. befestigt sein. Dieses Trägerteil kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder beliebige Kombinationen dieser Materialien.
Weiterhin kann das Trägerteil 4 einen beliebigen Aufbau und eine beliebige Struktur aufweisen. Es kann beispielsweise massiv, wie in den Figuren 3 und 4 gezeigt, hohl, wie in den Figuren 5 und 6 gezeigt, oder geschäumt sein oder eine gitterartige Struktur aufweisen. Die Oberfläche des Trägerteils kann typischerweise glatt, rau oder strukturiert sein.
Das Trägerteil 4 kann zusätzlich zur seiner Funktion als Träger für das schäumbare Material zur strukturellen Verstärkung oder zur Abdichtung des Bauteils oder auch zur Geräuschdämmung beitragen.

Wie in den Figuren 5 und 6 gezeigt, kann das Trägerteil weiterhin mindestens ein Befestigungsmittel 5, insbesondere einen Clip, zur Befestigung und Platzierung des Verstärkungselements in einem Hohlraum aufweisen. Die Befestigung des Verstärkungselements mit einem Clip eignet sich insbesondere für Anwendungen, bei welchen die gesamte Oberfläche des Bauteils, also auch die Hohlrauminnenwand, beispielsweise für eine Tauchlackierung erreichbar sein muss. In solchen Fällen ist eine Befestigung beispielsweise durch Verkleben nicht geeignet, da der Lack die Stelle der Verklebung nicht erreichen kann.

Die Herstellung erfindungsgemässer Verstärkungselemente ohne Trägerteil, wie sie in den Figuren 1 und 2 dargestellt sind, erfolgt üblicherweise dadurch, dass in einem ersten Schritt im Spritzgussverfahren der Kern aus einem schäumbaren Material hergestellt wird. Auf diesen Kern wird anschliessend der Faserwerkstoff, welcher mit einer härtenden Klebstoffzusammensetzung getränkt ist, geklebt.
Bei erfindungsgemässen Verstärkungselementen, bei welchen sich das schäumbare Material auf einem Trägerteil befindet, so wie sie in den Figuren 3 bis 8 dargestellt sind, unterscheidet sich das Herstellungsverfahren dem entsprechend, ob das Trägerteil aus einem durch Spritzguss verarbeitbaren Material besteht oder nicht. Ist dies der Fall, wird üblicherweise ein Zweikomponenten-Spritzgussverfahren eingesetzt. Dabei wird zuerst eine erste Komponente, in diesem Fall das Trägerteil, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das schäumbare Material, wird mit einem zweiten Spritzaggregat an die erste Komponente angespritzt. Anschliessend wird wiederum der Faserwerkstoff, welcher mit einer härtenden Klebstoffzusammensetzung versehen ist, auf das schäumbare Material geklebt. Besteht das Trägerteil aus einem Material, welches sich nicht durch das Spritzgussverfahren herstellen lässt, also beispielsweise aus einem Metall, wird das Trägerteil in ein entsprechendes Werkzeug gelegt und das schäumbare Material wird an das Trägerteil angespritzt.
Selbstverständlich besteht auch die Möglichkeit das schäumbare Material durch beliebige andere Befestigungsmittel oder -verfahren an ein Trägerteil zu befestigen. Das gleiche gilt auch für das Anordnen des Faserwerkstoffs, welcher mit einer härtenden Klebstoffzusammensetzung versehen ist, auf dem schäumbaren Material.

Weiterhin umfasst die Erfindung die Verwendung eines Verstärkungselements, wie es vorhergehend beschrieben wurde, zur Verstärkung von Hohlräumen von strukturellen Bauteilen. Vorzugsweise werden derartige strukturelle Bauteile in Karosserien und/oder Rahmen von Transport- und Fortbewegungsmitteln, insbesondere von Fahrzeugen zu Wasser oder zu Land oder von Luftfahrzeugen, eingesetzt. Bevorzugt umfasst die Erfindung die Verwendung eines erfindungsgemässen Verstärkungselements in Karosserien oder Rahmen von Automobilen, Lastkraftwagen, Eisenbahnwagen, Booten, Schiffen, Hubschraubern und Flugzeugen, meist bevorzugt in Automobilen.

Figur 7 zeigt ein Verstärkungselement, wie es in einem Hohlraum eines strukturellen Bauteils 6 eingesetzt wird vor der Schäumung des schäumbaren Materials 2, welches sich auf einem Trägerteil 4 befindet, und vor der Aushärtung der härtenden Klebstoffzusammensetzung auf dem Faserwerkstoff 3.

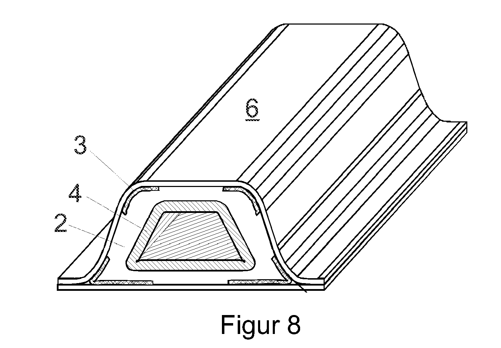

Figur 8 zeigt ein Verstärkungselement wie es in einem Hohlraum eines strukturellen Bauteils 6 eingesetzt ist. Das schäumbare Material 2 ist in diesem Fall bereits vollständig ausgeschäumt und drückt die Bahnen des Faserwerkstoffs mit der härtenden Klebstoffzusammensetzung an die Innenwände des strukturellen Bauteils 6. In dieser Position wurde bereits oder wird die Klebstoffzusammensetzung ausgehärtet.
Die Form und Struktur erfindungsgemässer Verstärkungselemente kann gemäss ihrem Einsatzort beliebig gewählt werden. Beispielsweise sind Verstärkungselemente wie sie in den Figuren 1 und 3 dargestellt sind, insbesondere geeignet zur Verstärkung von zylinderförmigen hohlen Bauteilen. Hingegen ist ein Verstärkungselement wie es in Figur 5 gezeigt ist insbesondere für Hohlräume rechteckiger Bauteile geeignet.

Weiterhin umfasst die Erfindung ein Verfahren zur Verstärkung von strukturellen Bauteilen umfassend die Schritte
i) Platzieren des Verstärkungselements gemäss vorhergehender Beschreibung in einem Hohlraum;
ii) Schäumen des schäumbaren Materials; und
iii) Aushärten der härtenden Klebstoffzusammensetzung.

Insbesondere umfasst die Erfindung ein Verfahren zur Verstärkung von strukturellen Bauteilen, wobei das schäumbare Material thermisch schäumbar ist. Schritt ii) umfasst somit das Erhöhen der Temperatur auf die Schäumungstemperatur des schäumbaren Materials. Diese Temperatur ist ≤ 160 °C, insbesondere 80 °C bis 150 °C, bevorzugt 90 °C bis 140 °C. Dabei ist die härtende Klebstoffzusammensetzung hitzehärtend und der Schritt iii) ist ein Schritt iii') des Erhöhens der Temperatur auf die Aushärtungstemperatur der hitzehärtenden Klebstoffzusammensetzung. Diese Temperatur ist ≥ 140 °C, insbesondere 150 °C bis 220 °C, bevorzugt 160 °C bis 200 °C..

### Bezugszeichenliste

- 1: Verstärkungselement
- 2: schäumbares Material
- 3: Faserwerkstoff mit härtenden Klebstoffzusammensetzung
- 4: Trägerteil
- 5: Befestigungsmittel
- 6: strukturelles Bauteil

## Patentansprüche

1. Verstärkungselement (1) aus einem schäumbaren Material (2) zur Verstärkung in Hohlräumen von strukturellen Bauteilen (6),
**dadurch gekennzeichnet,**
**dass** an der Aussenseite des schäumbaren Materials mindestes teilweise ein Faserwerkstoff (3) angeordnet ist, welcher mit einer härtenden Klebstoffzusammensetzung versetzt ist.

2. Verstärkungselement gemäss Anspruch 1,
**dadurch gekennzeichnet,**
**dass** das schäumbare Material thermisch, durch Feuchtigkeit oder durch elektromagnetische Strahlung, insbesondere thermisch, geschäumt wird.

3. Verstärkungselement gemäss einem der vorhergehenden Ansprüche,
**dadurch gekennzeichnet,**
**dass** die härtende Klebstoffzusammensetzung thermisch, durch Feuchtigkeit, elektromagnetische Strahlung oder Partikelstrahlung, ausgehärtet wird.

4. Verstärkungselement gemäss einem der vorhergehenden Ansprüche,
**dadurch gekennzeichnet,**
**dass** das schäumbare Material thermisch, bei einer Temperatur von ≤ 160 °C, insbesondere von 80 °C bis 150 °C, bevorzugt von 90 °C bis 140 °C, schäumbar ist und
**dass** die härtende Klebstoffzusammensetzung hitzehärtend ist und bei einer Temperatur von ≥ 140 °C, insbesondere von 160 °C bis 220 °C, bevorzugt von 180 °C bis 200 °C, aushärtet.

5. Verstärkungselement gemäss einem der vorhergehenden Ansprüche,
**dadurch gekennzeichnet,**
**dass** der Faserwerkstoff ausgewählt ist aus der Gruppe bestehend aus Glasfasern; Kohlefasern; Metallfasern, insbesondere Stahlfasern; Polymerfasern, insbesondere Aramidfasern; und Keramikfasern.

6. Verstärkungselement gemäss einem der vorhergehenden Ansprüche,
**dadurch gekennzeichnet,**
**dass** die härtende Klebstoffzusammensetzung eine einkomponentige Epoxidharzzusammensetzung oder eine einkomponentige Polyurethanzusammensetzung oder eine einkomponentige Acrylatzusammensetzung ist.

7. Verstärkungselement (1) gemäss einem der vorhergehenden Ansprüche,
**dadurch gekennzeichnet,**
**dass** das schäumbare Material (2) an einem Trägerteil (4) befestigt ist.

8. Verstärkungselement gemäss Anspruch 7,
**dadurch gekennzeichnet,**
**dass** das Trägerteil aus einem Kunststoff, insbesondere Polyurethan oder Polyamid, oder aus einem Metall, insbesondere Aluminium oder Stahl oder aus einer Kombination von Kunststoff und Metall aufgebaut ist.

9. Verstärkungselement gemäss einem der Ansprüche 7 und 8,
**dadurch gekennzeichnet,**
**dass** das Trägerteil ein Befestigungsmittel (5), insbesondere einen Clip, zur Platzierung und zur Befestigung des Verstärkungselements in einem Hohlraum aufweist.

10. Verwendung eines Verstärkungselements (1) gemäss einem der Ansprüche 1 bis 9 zur Verstärkung in Hohlräumen von strukturellen Bauteilen.

11. Verwendung gemäss Anspruch 10 zur Verstärkung in Hohlräumen von strukturellen Bauteilen in Karosserien und/oder Rahmen von Transport- und Fortbewegungsmitteln, insbesondere von Fahrzeugen zu Wasser oder zu Land oder von Luftfahrzeugen, bevorzugt von Automobilen, Lastkraftwagen, Eisenbahnwagen, Booten, Schiffen, Hubschraubern und Flugzeugen.

12. Verfahren zur Verstärkung in Hohlräumen von strukturellen Bauteilen umfassend die Schritte
i) Platzieren des Verstärkungselements gemäss einem der Ansprüche 1 bis 9 in einem Hohlraum;
ii) Schäumen des schäumbaren Materials (2); und
iii) Aushärten der härtenden Klebstoffzusammensetzung.

13. Verfahren gemäss Anspruch 12,
**dadurch gekennzeichnet,**
**dass** das schäumbare Material thermisch schäumbar ist und dass der Schritt ii) das Erhöhen der Temperatur auf die Schäumungstemperatur des schäumbaren Materials umfasst, wobei diese Temperatur ≤ 160 °C, insbesondere 80 °C bis 150 °C, bevorzugt 90 °C bis 140 °C ist; und dass die härtende Klebstoffzusammensetzung hitzehärtend ist und dass der Schritt iii) ein Schritt iii') des Erhöhens der Temperatur auf die Aushärtungstemperatur der hitzehärtenden Klebstoffzusammensetzung ist, wobei diese Temperatur ≥ 140 °C, insbesondere 150 °C bis 220 °C, bevorzugt 160 °C bis 200 °C, ist.
